# EUROPÄISCHE PATENTANMELDUNG

(11) **EP 2 620 903 A1**
(43) Veröffentlichungstag der Anmeldung: **31.07.2013**
(21) Anmeldenummer: 12152777.4
(22) Anmeldetag: 26.01.2012
(51) Int. Cl.: G06Q 30/02, G06F 17/30, H04M 1/725

(54) **Wareninformationseinrichtung**

(71) Anmelder: xplace GmbH, 37079 Göttingen (DE)
(72) Erfinder: Die Erfindernennung liegt noch nicht vor
(74) Vertreter: Rehberg Hüppe + Partner

(57) **Zusammenfassung**

Die Erfindung betrifft eine Kommunikationseinrichtung (1), welche eine Kommunikation zwischen einem Mobiltelefon (4) und einer Wareninformationseinrichtung (2), beispielsweise durch eine Scheibe (5) eines Schaufensters hindurch, ermöglicht.

Erfindungsgemäß wird über das Mobiltelefon (4) eine Kennzeichnung (16), insbesondere ein QR-Code (17), erfasst. Basierend auf dieser Kennzeichnung wird dann eine Kommunikation zwischen Mobiltelefon (4) und Wareninformationseinrichtung (2) aufgebaut, im Rahmen welcher der potentielle Kunde über das Mobiltelefon (4) in der Art einer "Fernbedienung" die Anzeige von Informationen zu Produkten an dem Wareninformationsdisplay (6) steuern kann. Möglicherweise kann dann der Kunde auch über das Mobiltelefon (4) unmittelbar einen Kauf eines ausgewählten Produktes tätigen. Die Kommunikation von dem Mobiltelefon (4) mit der Wareninformationseinrichtung (2) kann unmittelbar oder auch über einen zentralen Server (12) und Netzwerkverbindungen (13, 14) erfolgen.

## Beschreibung

### TECHNISCHES GEBIET DER ERFINDUNG

Die Erfindung betrifft eine Wareninformationseinrichtung, die beispielsweise in einem Warenhaus Einsatz findet. Des Weiteren betrifft die Erfindung eine Kommunikationseinrichtung mit einer derartigen Wareninformationseinrichtung.

### STAND DER TECHNIK

Anstelle von Informationstafeln mit fest aufgedruckten Informationen zu zum Verkauf angebotenen Produkten finden heute zunehmend Wareninformationseinrichtung Einsatz, die über ein Wareninformationsdisplay, insbesondere einen Bildschirm, verfügen, an welchem gesteuert durch eine Steuereinheit Informationen zu den Produkten angezeigt werden. Möglich ist auf diese Weise beispielsweise, in vorgegebener zeitlicher Abfolge unterschiedliche Informationen an dem Wareninformationsdisplay für den Kunden anzuzeigen. Bekannt sind darüber hinaus Wareninformationseinrichtungen, bei welchen der Kunde die an dem Wareninformationsdisplay angezeigten Informationen beeinflussen kann, indem der Kunde beispielsweise über eine Tastatur Eingaben zur Spezifizierung der Kundenwünsche machen kann. Beispielsweise kann der Kunde über eine derartige Tastatur eine Produktsparte auswählen, ein Produkt auswählen und unterschiedliche Informationsseiten zu einem Produkt anwählen.

### AUFGABE DER ERFINDUNG

Der Erfindung liegt die Aufgabe zugrunde, eine Wareninformationseinrichtung vorzuschlagen, welche hinsichtlich der Kommunikationsmöglichkeiten zwischen dem Kunden und der Wareninformationseinrichtung verbessert ist. Des Weiteren liegt der Erfindung die Aufgabe zugrunde, eine Kommunikationseinrichtung mit einer Wareninformationseinrichtung hinsichtlich der Möglichkeiten der Kommunikation mit der Wareninformationseinrichtung und ggf. auch weiteren Einrichtungen zu verbessern.

### LÖSUNG

Die Aufgabe der Erfindung wird erfindungsgemäß mit den Merkmalen einer Wareninformationseinrichtung gemäß Patentanspruch 1 gelöst. Weitere Ausgestaltungen einer erfindungsgemäßen Wareninformationseinrichtung ergeben sich entsprechend den abhängigen Patentansprüchen 2 bis 8. Eine weitere Lösung der der Erfindung zugrundeliegenden Aufgabe ist gegeben durch eine Kommunikationseinrichtung mit einer Wareninformationseinrichtung gemäß Patentanspruch 9. Weitere Ausgestaltungen einer derartigen Kommunikationseinrichtung ergeben sich entsprechend den abhängigen Patentansprüchen 10 bis 12.

### BESCHREIBUNG DER ERFINDUNG

Bekannte Wareninformationseinrichtungen gehen davon aus, dass eine Kommunikation eines Kunden mit einer Wareninformationseinrichtung ausschließlich möglich ist über eine Eingabeeinrichtung wie eine Tastatur oder einen Touchscreen, welche(r) Bestandteil der Wareninformationseinrichtung ist und von sämtlichen Kunden genutzt wird.

Alternativ oder zusätzlich hierzu schlägt die Erfindung vor, dass dem Kunden eine Kommunikation mit der Wareninformationseinrichtung über sein Mobiltelefon (worunter im Sinne der vorliegenden Erfindung auch ein Smartphone mit einem gegenüber einem Mobiltelefon erweiterten Funktionsumfang verstanden wird) ermöglicht wird. Zu diesem Zweck wird erfindungsgemäß die Wareninformationseinrichtung mit einer Kennzeichnung versehen. Die Kennzeichnung individualisiert die Wareninformationseinrichtung gegenüber anderen Wareninformationseinrichtungen. Diese Individualisierung der Wareninformationseinrichtung durch die Kennzeichnung dient dem gezielten Aufbau der Kommunikation des Mobiltelefons mit der individualisierten Wareninformationseinrichtung. Findet der Kunde somit eine Wareninformationseinrichtung vor, kann der Kunde mit seinem Mobiltelefon durch Nutzung der Kennzeichnung gezielt eine Kommunikation mit der Wareninformationseinrichtung aufbauen.

Die erfindungsgemäße Wareninformationseinrichtung besitzt eine Steuereinheit. Diese Steuereinheit ist mit Steuerlogik ausgestattet, die ein Signal verarbeitet, welches über eine Schnittstelle der Wareninformationseinrichtung empfangen wird. Dieses Signal ist im engeren oder weiteren Sinn abhängig von dem Mobiltelefon. Um lediglich einige Beispiele zu nennen, kann das Signal eine Kennung des Mobiltelefons beinhalten. Des Weiteren möglich ist, dass das Signal von dem Mobiltelefon abhängig ist, indem dieses eine Eingabe des Benutzers des Mobiltelefons beinhaltet, die dieser beispielsweise zuvor in einem Speicher des Mobiltelefons abgelegt hat oder zuvor oder aktuell über eine Tastatur oder einen Touchscreen des Mobiltelefons eingegeben hat. Möglich ist auch, dass das über die Schnittstelle empfangene Signal unmittelbar zwischen der Schnittstelle und dem Mobiltelefon übertragen wird oder dieses unter Zwischenschaltung eines Netzwerkes und/oder eines zentralen Servers erfolgt.

Möglich ist weiterhin, dass die Steuerlogik der Steuereinheit geeignet ausgebildet ist, um von einer Vielzahl von unter Umständen empfangenen Signalen, beispielsweise von mehreren Mobiltelefonen unterschiedlicher Benutzer, ein Signal "herauszufiltern" oder weiter zu verarbeiten, welches indiziert, beispielsweise über eine entsprechende enthaltene Kennung oder Codierung, dass dieses Signal für die über die Kennzeichnung individualisierte Wareninformationseinrichtung bestimmt ist.

Weiterhin ist erfindungsgemäß die Steuereinheit mit Steuerlogik ausgestattet, die eine Steuerung der Ausgabe von Informationen an dem Wareninformationsdisplay über das Mobiltelefon ermöglicht, was mit unmittelbarer Kommunikation zwischen Mobiltelefon und Wareninformationseinrichtung erfolgen kann oder unter Zwischenschaltung eines Netzwerks, von Kommunikationsverbindungen und/oder eines zentralen Servers.

Um lediglich einen beispielhaften, nicht beschränkenden Anwendungsbereich für die erfindungsgemäße Ausgestaltung zu nennen, kann die erfindungsgemäße Wareninformationseinrichtung auch in einem Schaufenster eines Warenhauses platziert sein. Kommt der Kunde nach Ladenschluss an der Wareninformationseinrichtung vorbei und zeigt beispielsweise das Wareninformationsdisplay Informationen an, welche das Interesse des Kunden wecken, kann auf die zuvor erläuterte Weise der Kunde über das Mobiltelefon mit der Wareninformationseinrichtung kommunizieren und gezielt die Ausgabe von Informationen an dem Wareninformationsdisplay steuern. Das Mobiltelefon dient in diesem Fall als eine Art "Fernsteuerung" des Wareninformationsdisplays.

(Es versteht sich, dass aber abweichend zu dem genannten Anwendungsbeispiel die Wareninformationseinrichtung auch an beliebiger Stelle in einem Warenhaus eingesetzt werden kann mit entsprechender Steuerung der Wareninformationseinrichtung über das Mobiltelefon.)

Für eine bevorzugte Ausgestaltung der Erfindung kommuniziert das Mobiltelefon unmittelbar über die Schnittstelle mit der Steuereinheit, so dass die Schnittstelle vorzugsweise geeignet ausgebildet ist, um beispielsweise ein Mobilfunksignal, ein WLAN-Signal o. ä. des Mobiltelefons empfangen zu können.

In alternativer oder kumulativer Ausgestaltung kommuniziert das Mobiltelefon mit der Schnittstelle und der Steuereinheit unter Zwischenschaltung eines Netzwerks und/oder eines zentralen Servers. Um lediglich einige nicht beschränkende Beispiele zu nennen, kann zunächst das Mobiltelefon eine Verbindung mit dem zentralen Server aufbauen, der dann von einer Vielzahl von Wareninformationseinrichtungen die über die Kennzeichnung identifizierte Wareninformationseinrichtung auswählt und gezielt eine Kommunikation zwischen dem Mobiltelefon und der ausgewählten Wareninformationseinrichtung aufbaut. Die Kommunikation kann dann im Folgenden auch über den zentralen Server erfolgen. Möglich ist aber auch, dass nach dem Aufbau der Kommunikation über den zentralen Server eine unmittelbare Kommunikation zwischen Mobiltelefon und Schnittstelle und Steuereinheit der ausgewählten Wareninformationseinrichtung ermöglicht wird. Hierbei kann das Mobiltelefon als eine (Internet)-Fernbedienung eingesetzt werden, die über das Internet mit der Wareninformationseinrichtung kommuniziert. Beispielsweise kann das Mobiltelefon über UMTS, WLAN oder einen nachfolgenden oder vorhergehenden entsprechenden Standard wie Edge eine Internetverbindung zu dem zentralen Server aufbauen. Übertragen werden können an diesen codierte Daten, die Kennzeichnung der Wareninformationseinrichtung oder hieraus abgeleitete Daten. Auf dieser Grundlage kann der zentrale Server erkennen, welche Wareninformationseinrichtung von dem Benutzer des Mobiltelefons gezielt ausgewählt worden ist. Möglich ist auch, dass dem zentralen Server mitgeteilt wird, was gerade an dem Wareninformationsdisplay der Wareninformationseinrichtung angezeigt wird, was über eine Kamera des Mobiltelefons erkannt werden kann und von dem Mobiltelefon an den zentralen Server übermittelt werden kann. Da auch die Wareninformationseinrichtung mit dem zentralen Server kommuniziert, kann die Fernbedienung über die "Dreiecksverbindung" zwischen Mobiltelefon, zentralem Server und Wareninformationseinrichtung erfolgen.

Für die Kennzeichnung kann eine beliebige Kennzeichnung verwendet werden. Um lediglich ein Beispiel zu nennen, kann die Kennzeichnung in einer Kennzeichnung des Warenhauses, einer aktuellen, laufenden Nummer der Wareninformationseinrichtung u. ä. bestehen. Eine codierte Kennzeichnung kann auch in einem Barcode bestehen. In besonderer Ausgestaltung ist die Kennzeichnung mit einem QR-Code (eingetragene Marke des Unternehmens Denso Wave Inc.) gebildet. Ein QR-Code (englisch "**Q**uick **R**esponse": "schnelle Antwort") ist ein zweidimensionaler Code, welcher aus einer üblicherweise quadratischen Matrix aus schwarzen und weißen Punkten besteht, welche die Kennzeichnung codiert binär darstellt. Eine spezielle Markierung in drei von vier Ecken der quadratischen Matrix kann die Orientierung vorgeben. Möglich ist, dass Daten eines QR-Codes durch einen Fehler korrigierenden Code geschützt sind, wodurch auch bei einem Verlust von 30 % der codierten binären Daten noch eine Decodierung und Erfassung der Informationen und Kennzeichnung möglich ist. Üblicherweise enthalten QR-Codes Versionsinformationen, das benutzte Datenformat und einen Datenteil mit den codierten Daten in redundanter Form. Die eingesetzte Matrix besteht beispielsweise aus 21 x 21 bis zu 177 x 177 Elementen. Die Verwendung von QR-Codes ist lizenz- und kostenfrei, wobei Spezifikationen über die International Standards Organisation in der Schweiz erhältlich sind. Möglich ist, dass Mobiltelefone bereits über eine eingebaute Kamera verfügen, mittels welcher der QR-Code erfasst werden kann, sowie mit einer Software ausgestattet sind, die das Decodieren der QR-Codes zu der Kennzeichnung ermöglicht.

In dem QR-Code können neben der Kennzeichnung zur Individualisierung der Wareninformationseinrichtung beliebige weitere Informationen zwischen Wareninformationseinrichtung und Mobiltelefon übertragen werden. Beispielsweise kann es sich hierbei um die Adresse des zentralen Servers handeln, über welchen die Kommunikation durchgeführt oder aufgebaut werden soll. Um lediglich weitere, nicht beschränkende Beispiele zu nennen, kann als Information in dem QR-Code der Standort der Wareninformationseinrichtung enthalten sein. Möglich ist auch, dass der angezeigte QR-Code abhängig ist von der gerade an dem Wareninformationsdisplay angezeigten Anzeige oder den hierüber ausgegebenen Informationen, so dass beispielsweise von dem Mobiltelefon an den zentralen Server übermittelt werden kann, welche Anzeige gerade an dem Wareninformationsdisplay der Wareninformationseinrichtung vorliegt, so dass dann der zentrale Server die Kommunikation mit der Wareninformationseinrichtung hieran anpassen kann. Besitzt beispielsweise das Wareninformationsdisplay mehrere unterschiedliche Anzeigeseiten, in welchen eine Auswahl von Auswahloptionen 1. bis 4. angezeigt wird, hängt die nach Wahl des Benutzers des Mobiltelefons zu erzeugende Folgeseite nicht nur von der Wahl einer der Ziffern 1. bis 4. ab, sondern auch von der gerade angezeigten Anzeigeseite. Möglich ist, dass der QR-Code entsprechende Adressen als codierte URL beinhaltet.

Für den Fall des Einsatzes eines QR-Codes für die individualisierende Kennzeichnung kann der QR-Code an beliebiger Stelle der Wareninformationseinrichtung angebracht sein. Für eine besondere Ausgestaltung der Erfindung wird allerdings der QR-Code an dem Wareninformationsdisplay angezeigt, so dass dieser nicht zwingend und permanent an einem Gehäuse der Wareninformationseinrichtung angebracht sein kann. Vielmehr kann das Wareninformationsdisplay, insbesondere der Bildschirm, von der Steuereinheit so angesteuert werden, dass dieser in einem Teilbereich den QR-Code darstellt. Auf einfache Weise kann dann für eine veränderte Betriebsweise der Wareninformationseinrichtung durch Veränderung des angezeigten QR-Codes ohne "physikalische" Änderung der Wareninformationseinrichtung die Kennzeichnung verändert werden. Möglich ist auch, dass nach dem Empfangen eines Signals eines Mobiltelefons, welches zu der Wareninformationseinrichtung passt, der QR-Code an dem Wareninformationsdisplay nicht weiter angezeigt wird, sondern vielmehr auch dieser Teilbereich des Bildschirms genutzt wird, um dem Kunden Informationen anzuzeigen. Möglich ist des Weiteren auch, dass der QR-Code für unterschiedliche an dem Wareninformationsdisplay angezeigte Anzeigeseiten verändert wird und einen Hinweis auf die jeweils aktuelle Anzeigeseite beinhaltet.

Grundsätzlich können beliebige Informationen an dem Wareninformationsdisplay angezeigt werden mit Steuerung der Anzeige durch den Kunden über das Mobiltelefon. Möglich ist, dass ergänzende Informationen zwischen Mobiltelefon und Wareninformationseinrichtung übertragen werden, auf Grundlage welcher bereits eine Vorauswahl von Informationen erfolgt, die den Kunden interessieren könnten und die dann gezielt an dem Wareninformationsdisplay angezeigt werden. Um lediglich ein nicht beschränkendes Beispiel zu nennen, kann von dem Mobiltelefon ein in dem Mobiltelefon bekanntes Alter oder ein Geschlecht des Besitzers des Mobiltelefons an die Wareninformationseinrichtung übertragen werden, so dass dann an dem Wareninformationsdisplay lediglich Informationen angezeigt werden, welche zu dem Alter des Besitzers des Mobiltelefons und/oder dem Geschlecht des Besitzers passen.

In weiterer Ausgestaltung der Erfindung ist die Steuereinheit der Wareninformationseinrichtung mit einer Steuerlogik ausgestattet, welche eine Steuerung der Ausgabe an dem Wareninformationsdisplay ermöglicht mit einer Wahl unterschiedlicher Produktsparten, unterschiedlicher Produkte, unterschiedlicher Informationen zu einem ausgewählten Produkt und/oder vergleichender Informationen zu mindestens zwei ausgewählten Produkten durch den Kunden. Hierbei erfolgt die Wahl über das von der Schnittstelle empfangene Signal des Mobiltelefons. Im einfachsten Fall kann der Kunde über das Mobiltelefon zwischen unterschiedlichen "Seiten" der Ausgabe an dem Wareninformationsdisplay "blättern". Ebenfalls möglich ist, dass dem Kunden unterschiedliche Produktbereiche an dem Wareninformationsdisplay angezeigt werden und der Kunde dann einen der angebotenen Produktbereiche über das Mobiltelefon anwählt. Beispielsweise kann dies erfolgen durch Steuerung eines Auswahlcursors an dem Wareninformationsdisplay über das Mobiltelefon. Ebenfalls möglich ist, dass der Kunde an dem Mobiltelefon Ziffern anwählt, welche auf dem Wareninformationsdisplay unterschiedlichen Produktbereichen zugeordnet sind. Um lediglich ein weiteres Beispiel zu nennen, kann auch an dem Wareninformationsdisplay eine Anzeige mehrerer unterschiedlicher Produkte, beispielsweise mit Kenndaten wie technischen Daten oder Preisgestaltung, erzeugt werden, wobei dann der Kunde über das Mobiltelefon ein einzelnes Produkt auswählen kann. Möglich ist auch, dass der Kunde über das Mobiltelefon mindestens zwei Produkte auswählt und dann an dem Wareninformationsdisplay eine Anzeige hervorruft, in welcher vergleichende Informationen zu den ausgewählten Produkten bereitgestellt werden, beispielsweise ein Vergleich der technischen Daten, Eigenschaften und/oder Preise der Produkte angezeigt wird.

In einer erfindungsgemäßen Kommunikationseinrichtung mit einer Wareninformationseinrichtung, wie diese zuvor erläutert worden ist, und mit einem Mobiltelefon ist das Mobiltelefon mit einer Erfassungseinrichtung, insbesondere einer Kamera, ausgestattet, mittels welcher die Kennzeichnung der Wareninformationseinrichtung erfasst werden kann, indem beispielsweise der Kunde mit dem Mobiltelefon ein Foto von der Kennzeichnung der Wareninformationseinrichtung macht. Das Mobiltelefon ist in diesem Fall mit einer Steuerlogik zur Erzeugung eines Signals ausgestattet. Für die Ausgestaltung dieses von der Steuerlogik zu erzeugenden Signals gibt es vielfältige alternative oder kumulative Möglichkeiten:
- Möglich ist, dass das Signal die Erkennung durch die Steuereinheit der Wareninformationseinrichtung ermöglicht, dass das von dem Mobiltelefon erzeugte Signal für die über die Kennzeichnung individualisierte Wareninformationseinrichtung bestimmt ist. Mit anderen Worten kann somit die Steuereinheit der Wareninformationseinrichtung das für sie bestimmte Signal "herausfiltern", während andere Signale nicht berücksichtigt werden.
- Möglich ist ebenfalls, dass das Signal die Steuerung der Ausgabe von Informationen an dem Wareninformationsdisplay über das Mobiltelefon ermöglicht. Dies kann entweder erfolgen mit einer unmittelbaren Kommunikation des Mobiltelefons mit der Schnittstelle und der Steuereinheit der Wareninformationseinrichtung. Ebenfalls möglich ist, dass dies mit einer "mittelbaren Kommunikation" mit der Schnittstelle und der Steuereinheit der Wareninformationseinrichtung erfolgt, worunter eine Zwischenschaltung eines Netzwerks und/oder des zentralen Servers verstanden wird.
- Möglich ist aber auch, dass das Signal über einen mit mehreren Steuereinheiten von Wareninformationseinrichtungen verbundenen zentralen Server einen Aufbau und/oder die Durchführung einer Kommunikation zwischen dem Mobiltelefon und dem über das Mobiltelefon und die Kennzeichnung der Wareninformationseinrichtung individualisierten Wareninformationseinrichtung ermöglicht.

Möglich ist, dass die Wareninformationseinrichtung und die damit gebildete Kommunikationseinrichtung lediglich Informationen für den Kunden bereitstellen, während der Kunde auf andere Weise zu weiteren Informationen gelangen kann und auch ggf. einen Kauf eine Produktes durchführt, beispielsweise indem der Kunde einen Verkaufsschalter mit Verkaufspersonal aufsucht. Insbesondere für den Fall, dass der Kunde außerhalb der Öffnungszeiten des Warenhauses in Kommunikation mit der Wareninformationseinrichtung getreten ist, ist es von Vorteil, wenn der Kunde, unter Umständen unmittelbar im Anschluss an die zuvor erläuterte Kommunikation mit der Wareninformationseinrichtung, auch den Kauf des Produkts abwickeln kann. Um dies zu ermöglichen, schlägt die Erfindung vor, die Steuereinheit des Mobiltelefons mit Steuerlogik auszustatten, welche einen elektronischen Kauf eines unter Zusammenwirken der Wareninformationseinrichtung und des Mobiltelefons ausgewählten Produkts abwickelt. Hierbei kann das Mobiltelefon auch an die Wareninformationseinrichtung die Informationen für den Kauf übermitteln, insbesondere den Kunden individualisierende Daten, das Produkt individualisierende Daten, weitere Kaufbedingungen wie beispielsweise eine Vertragswahl beim Kauf eines Mobiltelefons, die kaufvertragliche Annahmeerklärung für das Verkaufsangebot des Warenhauses, die Zahlungsbedingungen und die Bankverbindung. Durchaus möglich ist aber auch, dass die Abwicklung des Kaufes nicht über die Wareninformationseinrichtung erfolgt, sondern mit einem zentralen Server des Warenhauses oder aber auch einem dezentralen Server, welcher auch spezifisch an derartige Abwicklung von Verkäufen angepasst sein kann, erfolgt. Möglich ist, dass die Kommunikation zwischen Mobiltelefon und Wareninformationseinrichtung einerseits und zwischen Mobiltelefon und dem für die Kaufabwicklung verantwortlichen Server andererseits über unterschiedliche Netze erfolgt.

Grundsätzlich möglich ist im Rahmen der vorliegenden Erfindung, dass mittels des Mobiltelefons ausschließlich die Steuerung des Wareninformationsdisplays (insbesondere in der Art einer Fernbedienung) erfolgt. Eine weitere Ausgestaltung der Erfindung nutzt nicht nur das Mobiltelefon als eine Art Fernbedienung. Vielmehr wird zusätzlich zu dem Wareninformationsdisplay auch das Display des Mobiltelefons genutzt, um alternativ zu dem Wareninformationsdisplay Informationen für den Kunden anzubieten oder aber sogar auf dem Display des Mobiltelefons zusätzliche Informationen für den Kunden bereitzuhalten. Möglich ist auch, dass die an dem Mobiltelefon angezeigten Informationen eine kondensierte oder zusammengefasste Version der Informationen sind, welche an dem Wareninformationsdisplay angezeigt werden.

Für eine Ausgestaltung der erfindungsgemäßen Kommunikationseinrichtung sind das Mobiltelefon und die Wareninformationseinrichtung jeweils mit Steuerlogiken ausgestattet, die eine Abstimmung der Informationen, die einerseits an dem Mobiltelefon angezeigt werden und die andererseits an dem Wareninformationsdisplay angezeigt werden, aufeinander vornehmen, wie dies zuvor erläutert worden ist.

Bei einer derartigen Abstimmung schlägt eine weitere Ausgestaltung der Erfindung vor, dass besondere Vorkehrungen für den Datenschutz des Kunden getroffen werden, damit persönliche Informationen, beispielsweise für einen Kauf relevante Informationen, nicht an dem Wareninformationsdisplay angezeigt werden, wo diese auch für andere Kunden oder Passanten sichtbar sind. Die Erfindung schlägt vor, dass in diesem Fall das Mobiltelefon und die Wareninformationseinrichtung mit Steuerlogiken ausgestattet sind, welche bei Eingabe oder Anwahl persönlicher Daten oder Anwahl persönlicher Betriebsmodi an dem Mobiltelefon die Abstimmung der an dem Mobiltelefon angezeigten Informationen und der an dem Wareninformationsdisplay angezeigten Informationen aufheben. Wählt beispielsweise der Kunde an dem Mobiltelefon seine Bankverbindung, ein Kennwort oder ähnliches aus oder gibt der Kunde entsprechende Informationen ein, wird die Synchronisation der Anzeigen von Mobiltelefon und Wareninformationseinrichtung gezielt deaktiviert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Steuereinheit die Rede ist, ist dies so zu verstehen, dass eine Steuereinheit, zwei Steuereinheiten oder mehr Steuereinheiten vorhanden sein können. Möglich ist aber auch, dass nur genau eine Steuereinheit Verwendung findet.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer stark schematisierten Darstellung eine erfindungsgemäße Kommunikationseinrichtung mit einem Mobiltelefon und einer Wareninformationseinrichtung.
- **Fig. 2**: zeigt ein schematisiertes Blockschaltbild für eine Kommunikation zwischen einem Mobiltelefon und einer Wareninformationseinrichtung.

### FIGURENBESCHREIBUNG

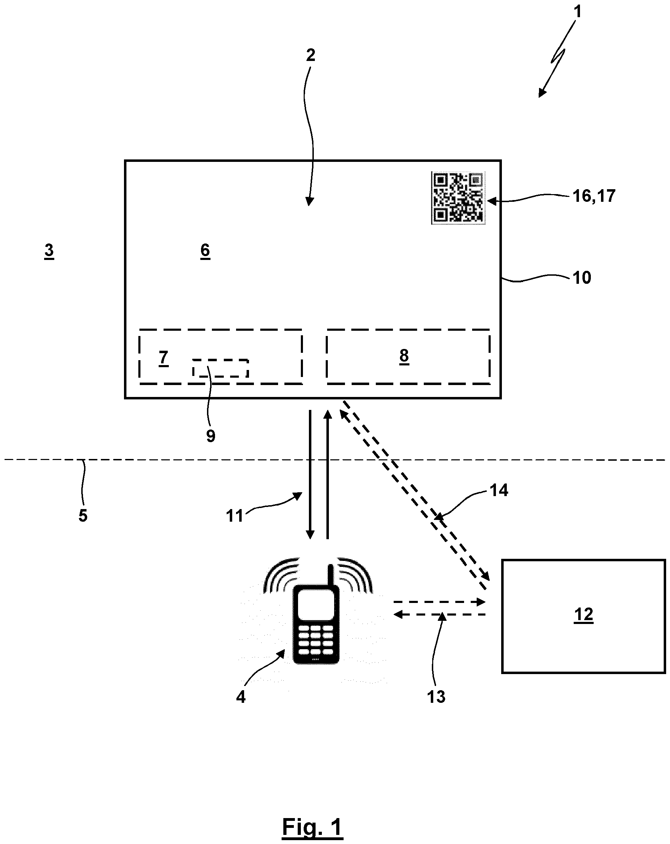

**Fig. 1** zeigt eine Kommunikationseinrichtung 1. Die Kommunikationseinrichtung ist mit einer Wareninformationseinrichtung 2 gebildet, die beispielsweise in einem Warenhaus 3 angeordnet sein kann. Des Weiteren ist die Kommunikationseinrichtung 1 mit einem Mobiltelefon 4 gebildet, welches ein potentieller Kunde in der räumlichen Umgebung der Wareninformationseinrichtung 2 mit sich führt. Möglich ist, dass die Wareninformationseinrichtung 2 und das Mobiltelefon 4 durch eine Scheibe 5 eines Schaufensters getrennt sind, wenn sich der Kunde mit dem Mobiltelefon 4 insbesondere außerhalb der Öffnungszeiten des Warenhauses 3 an dem Schaufenster vorbei bewegt.

Die Wareninformationseinrichtung 2 verfügt über ein Wareninformationsdisplay 6, insbesondere einen Bildschirm beliebiger Bauart, Auflösung und Größe. Des Weiteren besitzt die Wareninformationseinrichtung 2 eine Steuereinheit 7, eine Speichereinheit 8 zur Speicherung von Informationen für den Kunden und eine Schnittstelle 9, über welche ein uni- oder bidirektionaler Datenaustausch zwischen der Steuereinheit 7 der Wareninformationseinrichtung 2 und einer Steuereinheit des Mobiltelefons 4 möglich ist.

In Fig. 1 sind die Steuereinheit 7, die Speichereinheit 8 und die Schnittstelle 9 in ein gemeinsames Gehäuse 10 der Wareninformationseinrichtung 2 integriert, wobei die Schnittstelle 9 zusätzlich in ein die Steuereinheit 7 bildendes Modul integriert ist. Abweichend hierzu können die genannten Bauelemente separat ausgebildet sein, so dass die genannten Bauelemente über geeignete Einzel- oder Vielfachleitungen miteinander verbunden sind. Möglich ist beispielsweise auch, dass die Speichereinheit 8 dezentral angeordnet ist und die Steuereinheit 7 über eine Netzwerkverbindung auf die dezentrale Speichereinheit 8 zugreift. Die Wareninformationseinrichtung 2 und das Mobiltelefon 4 kommunizieren über eine Kommunikationsverbindung 11 unmittelbar miteinander. Alternativ oder zusätzlich möglich ist, dass die Kommunikation zwischen Wareninformationseinrichtung 2 und Mobiltelefon 4 unter Zwischenschaltung eines zentralen Servers oder einer zentralen Steuereinheit 12 erfolgt. Hierzu kommuniziert das Mobiltelefon 4 über eine erste Kommunikationsverbindung 13, die in Fig. 1 gestrichelt dargestellt ist, mit dem zentralen Server 12, welcher wiederum über eine zweite Kommunikationsverbindung 14 mit der Wareninformationseinrichtung 2 kommuniziert. Um lediglich ein nicht beschränkendes Beispiel zu nennen, kann die Kommunikationsverbindung 11 als W-LAN-Verbindung oder Bluetooth-Verbindung ausgebildet sein, während die Kommunikationsverbindung 13 eine UMTS-Verbindung ist und die Kommunikationsverbindung 14 eine drahtgebundene Netzwerkverbindung ist.

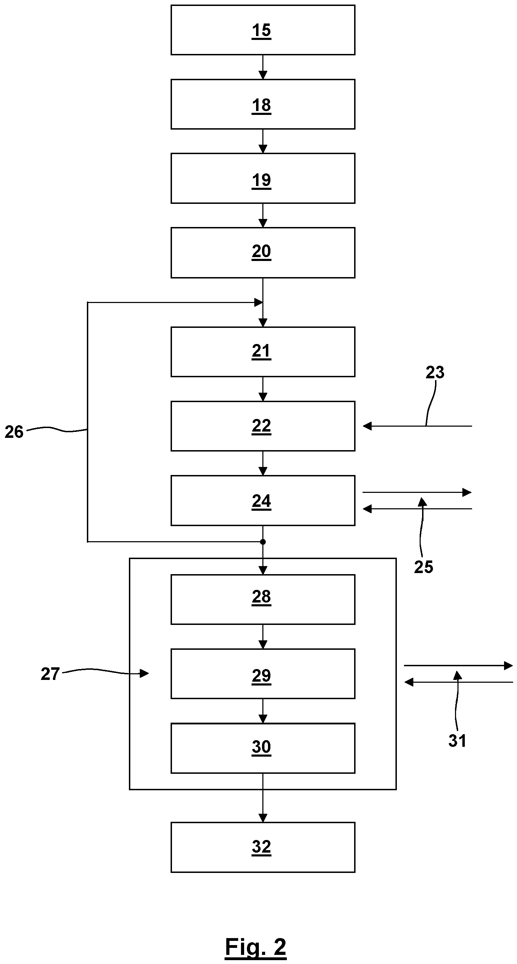

Eine beispielhafte Verwendung einer Kommunikationseinrichtung 1 wird anhand des schematischen Ablaufdiagramms gemäß **Fig. 2** erläutert:
In einem Verfahrensschritt 15 wird durch die Steuereinheit 7 das Wareninformationsdisplay 6 derart angesteuert, dass eine Kennzeichnung 16, insbesondere ein QR-Code 17, an dem Wareninformationsdisplay 6 angezeigt wird. Möglich ist, dass es sich bei der angezeigten Kennzeichnung 16 um eine tagesaktuelle oder anderweitig aktualisierte Kennzeichnung handelt. Hierbei wird die Kennzeichnung 16 für einzelne Wareninformationseinrichtungen 2 unterschiedlich gestaltet oder gleich für eine Gruppe von Wareninformationseinrichtung 2, beispielsweise eines einzelnen Warenhauses, gewählt. Möglich ist, dass gleichzeitig an dem Wareninformationsdisplay 6 bereits allgemeine Informationen für den Kunden angezeigt werden, insbesondere Informationen, wie die Wareninformationseinrichtung 2 genutzt werden kann und über das Mobiltelefon 4 gesteuert werden kann. Möglich ist auch, dass an dem Wareninformationsdisplay 6 eine Aufforderung angezeigt wird, die Kennzeichnung 16 durch das Mobiltelefon 4 zu erfassen.

In einem Verfahrensschritt 18 erfasst dann der potentielle Kunde mit dem Mobiltelefon 4, ggf. durch die Scheibe 5 hindurch, die Kennzeichnung 16. Insbesondere erfolgt diese Erfassung dadurch, dass mit einer in das Mobiltelefon 4 integrierten Kamera die Kennzeichnung 16, hier der QR-Code 17, aufgenommen wird.

In dem folgenden Verfahrensschritt 19 wird die Kennzeichnung 16 durch die Steuereinheit des Mobiltelefons 4 verarbeitet. Insbesondere wird der QR-Code 17 decodiert, d. h. der Datenteil des QR-Codes wird erfasst.

Im nächsten Verfahrensschritt 20 erfolgt dann der Aufbau der Kommunikation zwischen Mobiltelefon 4 und Wareninformationseinrichtung 2 über die Kommunikationsverbindung 11. Alternativ kann in diesem Verfahrensschritt der Kommunikationsaufbau über die Kommunikationsverbindungen 13, 14 erfolgen unter Nutzung des zentralen Servers 12. In diesem Fall kann in dem QR-Code 17 auch eine Internet-Adresse codiert sein, mittels welcher dann über die Kommunikationsverbindung 13 von dem Mobiltelefon auf den zentralen Server 12 bzw. die dem zentralen Server 12 zugeordnete Website zugegriffen werden kann, welche dann wiederum mit der Kommunikationsverbindung 14 mit der Wareninformationseinrichtung 2 in Wechselwirkung tritt. Vorzugsweise wird über das Mobiltelefon 4 ein über die Kommunikationsverbindung 11 bzw. die Kommunikationsverbindungen 13, 14 übertragenes Signal erzeugt, welches eine Kennzeichnung beinhaltet, dass die weiteren in dem Signal enthaltenen Informationen für die über die Kennzeichnung 16 individualisierte Wareninformationseinrichtung 2 bestimmt sind. Nur wenn die Steuereinheit 7 der Wareninformationseinrichtung 2 ein entsprechend gekennzeichnetes Signal erhält, erfolgt eine weitere Verarbeitung des Signals und weitere Kommunikation zwischen Mobiltelefon 4 und Wareninformationseinrichtung 2 wie im Folgenden beschrieben:
In einem Verfahrensschritt 21 erfolgt eine manuelle Vorgabe durch den potentiellen Kunden über das Mobiltelefon 4, welche dann über die Kommunikationsverbindung 11 oder die Kommunikationsverbindung 13, 14 an die Wareninformationseinrichtung 2 übertragen wird.
Nach Empfang dieses Signals erfolgt in dem Verfahrensschritt 22, veranlasst durch die Steuereinheit 7, eine Veränderung der Anzeige an dem Wareninformationsdisplay 6. Die Veränderung korreliert mit der Wahl des potentiellen Kunden in dem Verfahrensschritt 21. Möglich ist, dass die an dem Wareninformationsdisplay 6 angezeigten oder veränderten Informationen in dem Verfahrensschritt 22 von der Speichereinheit 8 und/oder über die Kommunikationsverbindung 14 von dem zentralen Server 12 in Form von Daten 23 empfangen werden.

In einem optionalen Verfahrensschritt 24 kann dann auch die Ausgabe an einem Display des Mobiltelefons 4 modifiziert werden, wobei beispielsweise an dem Mobiltelefon dieselbe Anzeige erzeugt wird wie an dem Wareninformationsdisplay 6 oder eine zusammenfassende Darstellung. Hierbei kann in dem Verfahrensschritt 24 ein Datenaustausch 25 über die Kommunikationsverbindung 13 und/oder die Kommunikationsverbindung 11 erfolgen für eine geeignete Anpassung der Ausgabe des Mobiltelefons.

Dieses Vorgehen mit den Verfahrensschritten 21, 22 und ggf. 24 kann dann in einer Iterationsschleife 26 wiederholt durchlaufen werden.

Im Folgenden soll ein nicht beschränkendes Beispiel für die Anzeigen an dem Wareninformationsdisplay 6 und dem Mobiltelefon 4 anhand der Verfahrensschritte 21, 22, 24 erläutert werden:
Möglich ist, dass zunächst vor dem Verfahrensschritt 21 sowohl an dem Wareninformationsdisplay 6 als auch an dem Display des Mobiltelefons 4 unterschiedliche Produktbereiche, insbesondere Produktbereiche "Computer und Büro", "TV + Heimkino", "HiFi und MP3", "Foto und Video", "Telefon und Navi", "Haushalt und Küche", "Bad und Gesundheit", "Musik", angezeigt werden. Hierbei können die Darstellungen an den jeweiligen Displays unterschiedlich sein. So kann an dem Display des Mobiltelefons 4 eine wortbasierte Anzeige erfolgen, da das Display verhältnismäßig klein ist, während an dem Wareninformationsdisplay 6 eine graphisch animierte Anzeige erfolgt oder Produktbeispiele mit Fotos zu den Produktbereichen angegeben sind. In dem Verfahrensschritt 21 wählt dann der Kunde beispielsweise einen Produktbereich wie den Bereich "Computer" aus. Mittels der Verfahrensschritte 22, 24 werden dann wiederum Teil-Produktbereiche des Produktbereichs (hier "Computer ") am Wareninformationsdisplay 6 und dem Display des Mobiltelefons 4 angezeigt, insbesondere auch ein Teilproduktbereich "Computerspiele". In der nächsten Iterationsschleife 26 wählt dann der potentielle Kunde über das Mobiltelefon den Teilproduktbereich "Computerspiele" aus, woraufhin mit den Verfahrensschritten 22, 24 an dem Display des Mobiltelefons 4 und dem Wareninformationsdisplay 6 die einzelnen verfügbaren Computerspiele angezeigt werden. Hierbei kann beispielsweise auf dem Wareninformationsdisplay 6 eine Anzeige einer Fotografie des Produkts, hier eines Bildschirmauszuges des Computerspiels, eine Bildfolge für den animierten Betrieb des Computerspiels o. ä. angezeigt werden, während an der Anzeige des Mobiltelefons 4 der Produktname und der Preis und eine vereinfachte Darstellung des Produkts angezeigt wird. Schließlich kann mittels einer weiteren Iterationsschleife 26 der Kunde in einem Verfahrensschritt 21 ein Produkt auswählen.

Ist eine Auswahl eines Produkts vorgenommen worden, kann im Rahmen der Erfindung auch eine Verkaufsabwicklung 27 erfolgen. Vorzugsweise erfolgt diese über das Mobiltelefon 4, während das Wareninformationsdisplay 6 weiterhin allgemeine Informationen zu dem Produkt anzeigt.

In einem Verfahrenschritt 28 identifiziert sich der Kunde, was durch manuelle Eingabe des Kunden auf entsprechende Aufforderung erfolgt oder automatisiert über das Mobiltelefon erfolgen kann. Gegenstand des Verfahrensschritts 28 kann auch die Übermittlung von Zahlungsinformationen wie Kontonummer, Bankleitzahl, Kreditkarteninformationen u. ä. sein.

Möglich ist, dass in einem Verfahrensschritt 29 der Kunde auch ein Passwort in das Mobiltelefon eingibt, wodurch sich der Benutzer des Mobiltelefons 4 gegenüber dem Mobiltelefon 4 selbst, gegenüber dem zentralen Server 12 und/oder gegenüber der Wareninformationseinrichtung 2 identifiziert.

Um zu einem Kaufvertragsabschluss zu kommen, muss der Kunde das Vertragsangebot für den Kauf des Produkts durch das Warenhaus oder die Warenhauskette in einem Verfahrensschritt 30 annehmen.

Während der Verkaufsabwicklung 27 erfolgt ein Datenaustausch 31 mit der Wareninformationseinrichtung 2, was über die Kommunikationsverbindung 11 und/oder die Kommunikationsverbindungen 13, 14 unter Zwischenschaltung des zentralen Servers 12 erfolgen kann. Ebenfalls möglich ist, dass für die Verkaufsabwicklung 27 das Mobiltelefon 4 ausschließlich über die Kommunikationsverbindung 13 mit dem zentralen Server 12 kommuniziert, von welchem dann die weitere Verkaufsabwicklung 27 gesteuert wird, ohne dass die Wareninformationseinrichtung 2 hieran weiter beteiligt ist. Mit der manuellen Eingabe über das Mobiltelefon 4, dass die Kommunikation mit der Wareninformationseinrichtung 2 beendet werden soll, mit der Vervollständigung der Verkaufabwicklung 27, mit der Erfassung, dass sich das Mobiltelefon 4 von der Wareninformationseinrichtung 2 weg bewegt oder einen zu großen Abstand zu dieser aufweist und/oder nach einer vorgegebenen Zeitspanne, über welche keine Eingabe an dem Mobiltelefon 4 mehr erfolgt ist, wird in einem Verfahrensschritt 32 das Verfahren beendet, womit an dem Wareninformationsdisplay 6 wieder ein Startmenu angezeigt werden kann.

### BEZUGSZEICHENLISTE

- 1: Kommunikationseinrichtung
- 2: Wareninformationseinrichtung
- 3: Warenhaus
- 4: Mobiltelefon
- 5: Scheibe
- 6: Wareninformationsdisplay
- 7: Steuereinheit
- 8: Speichereinheit
- 9: Schnittstelle
- 10: Gehäuse
- 11: Kommunikationsverbindung
- 12: zentraler Server
- 13: Kommunikationsverbindung
- 14: Kommunikationsverbindung
- 15: Verfahrensschritt
- 16: Kennzeichnung
- 17: QR-Code
- 18: Verfahrensschritt
- 19: Verfahrensschritt
- 20: Verfahrensschritt
- 21: Verfahrensschritt
- 22: Verfahrensschritt
- 23: Daten
- 24: Verfahrensschritt
- 25: Datenaustausch
- 26: Iterationsschleife
- 27: Verkaufsabwicklung
- 28: Verfahrensschritt
- 29: Verfahrensschritt
- 30: Verfahrensschritt
- 31: Datenaustausch
- 32: Verfahrensschritt

## Patentansprüche

1. Wareninformationseinrichtung (2) mit
a) einem Wareninformationsdisplay (6),
b) einer Steuereinheit (7),
c) einer Schnittstelle (9) für ein Signal, welches von einem Mobiltelefon (4) abhängig ist, und
d) einer Kennzeichnung (16), welche durch das Mobiltelefon (4) erfasst werden kann und welche die Wareninformationseinrichtung (2) gegenüber anderen Wareninformationseinrichtungen individualisiert,
e) wobei die Steuereinheit (7) mit Steuerlogik ausgestattet ist, welche
ea) ein über die Schnittstelle (9) empfangenes Signal, welches von dem Mobiltelefon (4) abhängig ist, verarbeitet und
eb) eine Steuerung der Ausgabe von Informationen an dem Wareninformationsdisplay (6) über das Mobiltelefon (4) ermöglicht.

2. Wareninformationseinrichtung (2) nach Anspruch 1, **dadurch gekennzeichnet, dass** die Steuereinheit (7) mit Steuerlogik ausgestattet ist, die erkennt, ob ein über die Schnittstelle empfangenes Signal für die über die Kennzeichnung (16) individualisierte Wareninformationseinrichtung (2) bestimmt ist.

3. Wareninformationseinrichtung (2) nach einem der vorhergehenden Ansprüche, **dadurch gekennzeichnet, dass** das Mobiltelefon (4) unmittelbar über die Schnittstelle (9) mit der Steuereinheit (7) kommuniziert.

4. Wareninformationseinrichtung (2) nach einem der vorhergehenden Ansprüche, **dadurch gekennzeichnet, dass** das Mobiltelefon (4) unter Zwischenschaltung eines Netzwerks und/oder eines zentralen Servers (12) über die Schnittstelle (9) mit der Steuereinheit (7) kommuniziert.

5. Wareninformationseinrichtung (2) nach einem der vorhergehenden Ansprüche, **dadurch gekennzeichnet, dass** die Kennzeichnung (16) mit einem QR-Code (17) gebildet ist.

6. Wareninformationseinrichtung (2) nach Anspruch 5, **dadurch gekennzeichnet, dass** der QR-Code (17) an dem Wareninformationsdisplay (6) angezeigt wird.

7. Wareninformationseinrichtung (2) nach Anspruch 6, **dadurch gekennzeichnet, dass** der QR-Code (17) eine Kennzeichnung für ein Aktuelle an dem Wareninformationsdisplay (6) angezeigte Information oder Seite beinhaltet.

8. Wareninformationseinrichtung (2) nach einem der vorhergehenden Ansprüche, **dadurch gekennzeichnet, dass** die Steuereinheit (7) mit Steuerlogik ausgestattet ist, welche eine Steuerung der Ausgabe mit einer Wahl
a) unterschiedlicher Produktsparten,
b) unterschiedlicher Produkte,
c) unterschiedlicher Informationen zu einem ausgewählten Produkt und/oder
d) vergleichender Informationen zu mindestens zwei ausgewählten Produkten an dem Wareninformationsdisplay (6) ermöglicht, wobei die Wahl über das von der Schnittstelle (9) empfangene Signal des Mobiltelefons (4) vorgebbar ist.

9. Kommunikationseinrichtung (1) mit
a) einer Wareninformationseinrichtung (2) nach einem der vorhergehenden Ansprüche und
b) einem Mobiltelefon (4),
c) wobei das Mobiltelefon (4)
ca) mit einer Erfassungseinrichtung, insbesondere einer Kamera und zugeordneter Steuerlogik, zur Erfassung der Kennzeichnung (16) der Wareninformationseinrichtung (2) und
cb) mit Steuerlogik zur Erzeugung eines Signals ausgestattet ist, welches
- ermöglicht, dass die Steuereinheit (7) der Wareninformationseinrichtung (2) erkennt, dass das von dem Mobiltelefon (4) erzeugte Signal für die über die Kennzeichnung (16) individualisierte Wareninformationseinrichtung (2) bestimmt ist, und/oder welches
- die Steuerung der Ausgabe von Informationen an dem Wareninformationsdisplay (6) über das Mobiltelefon (4) mit einer unmittelbaren Kommunikation des Mobiltelefons (4) mit der Schnittstelle (9) und der Steuereinheit (7) der Wareninformationseinrichtung (2) oder einer mittelbaren Kommunikation mit der Schnittstelle (9) und der Steuereinheit (7) der Wareninformationseinrichtung (2) unter Zwischenschaltung eines Netzwerks und/oder eines zentralen Servers (12) ermöglicht und/oder
- über einen mit mehreren Steuereinheiten von Wareninformationseinrichtungen verbundenen zentralen Server einen Aufbau und/oder die Durchführung einer Kommunikation zwischen dem Mobiltelefon (4) und dem über das Mobiltelefon (4) und die Kennzeichnung der Wareninformationseinrichtung individualisierten Wareninformationseinrichtung (2) ermöglicht.

10. Kommunikationseinrichtung (1) nach Anspruch 9, **dadurch gekennzeichnet, dass** eine Steuereinheit des Mobiltelefons (4) mit Steuerlogik ausgestattet ist, welche einen elektronischen Kauf eines unter Zusammenwirken des zentralen Servers und/oder der Wareninformationseinrichtung (2) und des Mobiltelefons (4) ausgewählten Produkts abwickelt.

11. Kommunikationseinrichtung (1) nach Anspruch 9 oder 10, **dadurch gekennzeichnet, dass** das Mobiltelefon (4) und die Wareninformationseinrichtung (2) mit Steuerlogiken ausgestattet sind, welche die an dem Mobiltelefon (4) angezeigten Informationen und die an dem Wareninformationsdisplay (6) angezeigten Informationen aufeinander abstimmen.

12. Kommunikationseinrichtung (1) nach einem der Ansprüche 9 bis 11, **dadurch gekennzeichnet, dass** das Mobiltelefon (4) und die Wareninformationseinrichtung (2) mit Steuerlogiken ausgestattet sind, welche bei Eingabe oder Anwahl persönlicher Daten oder Anwahl persönlicher Betriebsmodi an dem Mobiltelefon (4) die Abstimmung der an dem Mobiltelefon (4) angezeigten Informationen und der an dem Wareninformationsdisplay (6) angezeigten Informationen zumindest teilweise aufheben.
